(19) Europäisches Patentamt
European Patent Office
Office européen des brevets

(11) **EP 3 993 095 A1**

(12) **EUROPEAN PATENT APPLICATION**
published in accordance with Art. 153(4) EPC

(43) Date of publication:
**04.05.2022 Bulletin 2022/18**

(21) Application number: **20860496.7**

(22) Date of filing: **19.08.2020**

(51) International Patent Classification (IPC):
$H01M\ 4/131$ (2010.01)       $H01M\ 4/505$ (2010.01)
$H01M\ 4/525$ (2010.01)       $H01M\ 10/0525$ (2010.01)

(52) Cooperative Patent Classification (CPC):
**H01M 4/131; H01M 4/505; H01M 4/525;
H01M 10/0525;** Y02E 60/10

(86) International application number:
**PCT/CN2020/109987**

(87) International publication number:
**WO 2021/042989 (11.03.2021 Gazette 2021/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2019  CN 201910824732**

(71) Applicant: **Contemporary Amperex Technology
Co., Limited
Fujian PRC 352100 (CN)**

(72) Inventors:
• **DOU, Shushi
Ningde, Fujian 352100 (CN)**

• **HU, Chunhua
Ningde, Fujian 352100 (CN)**
• **JIANG, Yao
Ningde, Fujian 352100 (CN)**
• **WU, Qi
Ningde, Fujian 352100 (CN)**
• **HE, Jinhua
Ningde, Fujian 352100 (CN)**
• **DENG, Bin
Ningde, Fujian 352100 (CN)**

(74) Representative: **Boult Wade Tennant LLP
Salisbury Square House
8 Salisbury Square
London EC4Y 8AP (GB)**

(54) **POSITIVE ELECTRODE ACTIVE MATERIAL AND MANUFACTURING METHOD THEREOF, POSITIVE ELECTRODE PLATE, AND LITHIUM-ION SECONDARY BATTERY AND BATTERY MODULE, BATTERY PACK AND DEVICE ASSOCIATED THEREWITH**

(57)    This application discloses a positive electrode active material and a preparation method thereof, a positive electrode plate, a lithium-ion secondary battery, and a battery module, battery pack and apparatus related thereto. The positive electrode active material includes secondary particles formed by agglomeration of primary particles, where the primary particles are a lithium transition metal oxide, and a transition metal site of the lithium transition metal oxide includes nickel and a doping element; and a Young's modulus E of the primary particles satisfies 175 GPa ≤ E ≤ 220 GPa.

FIG. 3

EP 3 993 095 A1

**Description**

**CROSS-REFERENCE TO RELATED APPLICATIONS**

This application claims priority to Chinese patent application No. 201910824732.5, filed on September 02, 2019 and entitled "POSITIVE ELECTRODE ACTIVE MATERIAL, POSITIVE ELECTRODE PLATE, AND LITHIUM-ION SECONDARY BATTERY", which is incorporated herein by reference in its entirety.

**TECHNICAL FIELD**

This application relates to the field of secondary battery technologies, and specifically, to a positive electrode active material and a preparation method thereof, a positive electrode plate, a lithium-ion secondary battery, and a battery module, battery pack, and apparatus related thereto.

**BACKGROUND**

Lithium-ion secondary batteries are rechargeable batteries that operate mainly depending on migration of lithium ions between a positive electrode and a negative electrode. They are a form of clean energy that is widely used currently. As an important part of a lithium-ion secondary battery, a positive electrode active material provides the lithium ions that move back and forth between the positive and negative electrodes in a battery charge/discharge process, and therefore the positive electrode active material is of great importance to battery performance.

A nickel-containing lithium composite oxide has relatively high theoretical capacity. A lithium-ion secondary battery using a nickel-containing lithium composite oxide can be expected to have higher energy density, but a study has revealed that such lithium-ion secondary battery has poor high-temperature cycling performance.

**SUMMARY**

A first aspect of this application provides a positive electrode active material, including secondary particles formed by agglomeration of primary particles, where the primary particles are a lithium transition metal oxide, and a transition metal site of the lithium transition metal oxide includes nickel and a doping element; and a Young's modulus E of the primary particles satisfies $175 \text{ GPa} \leq E \leq 220 \text{ GPa}$.

The positive electrode active material in this application includes secondary particles formed by agglomeration of primary particles, where the primary particles include a lithium transition metal oxide, and the transition metal site of the lithium transition metal oxide includes nickel. The positive electrode active material has a characteristic of relatively high charge and discharge voltages and specific capacity, enabling the lithium-ion secondary battery to have a relatively high energy density. The transition metal site of the lithium transition metal oxide further includes a doping element, so that a Young's modulus E of the primary particles satisfies $175 \text{ GPa} \leq E \leq 220 \text{ GPa}$. This improves deformation resistance of the positive electrode active material, prevents the primary particles and the secondary particles from cracking under a pressure, and enables the primary particles to have appropriate toughness, thereby effectively preventing the primary particles from brittlely cracking under an external pressure. In addition, the positive electrode active material can better adapt to intercalation and deintercalation of lithium ions, thereby improving structural stability and high-temperature cycling stability of the positive electrode active material, and improving high-temperature cycling performance of the lithium-ion secondary battery. The positive electrode active material in this application helps ensure a relatively high energy density and high-temperature cycling performance of the lithium-ion secondary battery.

In any one of the foregoing embodiments, a Young's modulus E of the primary particles may satisfy that $180 \text{ GPa} \leq E \leq 210 \text{ GPa}$. Optionally, $190 \text{ GPa} \leq E \leq 205 \text{ GPa}$. In this way, the foregoing effects can be better played, further improving high-temperature cycling performance of the battery.

In any one of the foregoing embodiments, a relative deviation of local mass concentration of the doping element in the secondary particles may be less than 30%, and optionally less than 20%. Therefore, highly uniform distribution of the doping element in the secondary particles can further improve structural stability, capacity extractability, and high-temperature cycling performance of the positive electrode active material as a whole, thereby further improving the energy density and the high-temperature cycling performance of the lithium-ion secondary battery.

In any one of the foregoing embodiments, the doping element in an oxidation state has a valence higher than +3, and optionally has one or more of valences of +4, +5, +6, +7, and + 8. The doping element has a relatively high oxidation valence state, which can support a positive electrode in releasing more lithium ions and further improve the energy density of the battery. The doping element in a high-valence state has a stronger capability of binding with oxygen, which helps improve the Young's modulus E of the primary particles and further improve the high-temperature cycling performance of the battery.

In any one of the foregoing embodiments, the doping element may be selected from one or more of Si, Ti, V, Cr, Ge, Se, Zr, Nb, Mo, Ru, Rh, Pd, Sb, Te, Ce, and W. Optionally, the doping element includes one or more of Si, Zr, Nb, Ru, Pd, Sb, Te, and W. The doping element can better improve the energy density and the high-temperature cycling performance of the lithium-ion secondary battery.

In any one of the foregoing embodiments, the true density $\rho_{true}$ of the positive electrode active material may satisfy that 4.6 g/cm$^3 \leq \rho_{true} \leq$ 4.9 g/cm$^3$. The positive electrode active material can have a relatively high specific capacity, thereby improving the energy density of the battery.

In any one of the foregoing embodiments, a true doping concentration $\Phi$ of the positive electrode active material may satisfy that 2300 $\mu$g/cm$^3 \leq \Phi \leq$ 50000 $\mu$g/cm$^3$, optionally 3000 $\mu$g/cm$^3 \leq \Phi \leq$ 30000 $\mu$g/cm$^3$, optionally 14800 $\mu$g/cm$^3 \leq \Phi \leq$ 36700 $\mu$g/cm$^3$, and optionally 24800 $\mu$g/cm$^3 \leq \Phi \leq$ 25500 $\mu$g/cm$^3$. The true doping concentration of the positive electrode active material is within the foregoing range, which can improve the Young's modulus E of the primary particles, can also ensure that the positive electrode active material has a relatively high capability in transmission and diffusion of lithium ions, and can improve the energy density and the high-temperature cycling performance of the battery.

In any one of the foregoing embodiments, a deviation of a mass concentration of the doping element in the positive electrode active material with respect to an average mass concentration of the doping element in the secondary particles satisfies $\varepsilon <$ 50%, optionally $\varepsilon \leq$ 30%, and optionally $\varepsilon \leq$ 20%. The positive electrode active material satisfies $\varepsilon$ is within the foregoing range, the positive electrode active material shows good macro and micro consistency, and high particle stability, thereby helping the positive electrode active material have a relatively high capacity extractability, and room-temperature and high-temperature cycling performance. Therefore, corresponding performance of the battery is also improved.

In any one of the foregoing embodiments, a volume average particle size $D_v50$ of the positive electrode active material may be 5 $\mu$m to 20 $\mu$m, optionally 8 $\mu$m to 15 $\mu$m, and further optionally 9 $\mu$m to 11 $\mu$m. $D_v50$ of the positive electrode active material is within the foregoing range, which can improve transmission and diffusion performance of lithium ions and electrons, thereby improving the cycling performance and rate performance of the lithium-ion secondary battery. The positive electrode active material can further have a relatively high compacted density, which can improve the energy density of the battery.

In any one of the foregoing embodiments, a specific surface area of the positive electrode active material may be 0.2 m$^2$/g to 1.5 m$^2$/g, and optionally 0.3 m$^2$/g to 1 m$^2$/g. The specific surface area of the positive electrode active material is within the foregoing range, which can improve capacity extractability and cycling life of the positive electrode active material, and can also improve processing performance of a positive electrode slurry, so that the battery obtains a relatively high energy density and cycling performance.

In any one of the foregoing embodiments, tap density of the positive electrode active material may be 2.3 g/cm$^3$ to 2.8 g/cm$^3$. The tap density of the positive electrode active material is within the foregoing range, enabling the lithium-ion secondary battery to have a relatively high energy density.

In any one of the foregoing embodiments, compacted density of the positive electrode active material under a pressure of 5 tons (equivalent to 49 kN) may be 3.1 g/cm$^3$ to 3.8 g/cm$^3$. The positive electrode active material with a compacted density within the specified range helps enabling the lithium-ion secondary battery to have a relatively high energy density and cycling performance.

In any one of the foregoing embodiments, the lithium transition metal oxide may satisfy a chemical formula $Li_{1+a}[Ni_xCo_yMn_zM_b]O_2$, where M is the doping element, M is selected from one or more of Si, Ti, V, Cr, Ge, Se, Zr, Nb, Mo, Ru, Rh, Pd, Sb, Te, Ce, and W, $0.5 \leq x < 1$, $0 \leq y < 0.3$, $0 \leq z < 0.3$, $0 \leq a < 0.2$, $0 < b < 0.3$, and $x + y + z + b = 1$.

In any one of the foregoing embodiments, the lithium transition metal oxide may satisfy a chemical formula $Li_{1+c}[Ni_{r-d}Co_sMn_tM'_d]O_2$, where M' is the doping element, M' is selected from one or more of Si, Ti, V, Cr, Ge, Se, Zr, Nb, Mo, Ru, Rh, Pd, Sb, Te, Ce, and W, $0.5 \leq r - d < 1$, $0 \leq s < 0.3$, $0 \leq t < 0.3$, $0 \leq c < 0.2$, $0 < d < 0.3$, $r + s + t = 1$.

A second aspect of this application provides a preparation method of a positive electrode active material, including the following steps:

mixing a precursor of the positive electrode active material, a lithium source, and a precursor of a doping element to obtain a mixture, where the precursor of the positive electrode active material is selected from one or more of an oxide, hydroxide, or carbonate that contains Ni, optionally Co, and optionally Mn; and

subjecting the mixed material to a sintering treatment in an oxygen-containing atmosphere at a temperature of 600°C to 1000°C to obtain the positive electrode active material, where

the positive electrode active material includes secondary particles formed by agglomeration of primary particles, the primary particles include a lithium transition metal oxide, and a transition metal site of the lithium transition metal oxide includes nickel and a doping element; and a Young's modulus E of the primary particles satisfies 175 GPa $\leq$ E $\leq$ 220 GPa.

The positive electrode active material obtained in the preparation method provided in this application includes secondary particles formed by agglomeration of primary particles, where the primary particles include a nickel-containing lithium transition metal oxide, doping modification at the transition metal site of the lithium transition metal oxide makes the Young's modulus E of the primary particles satisfy that 175 GPa $\leq$ E $\leq$ 220 GPa. Therefore, the positive electrode active material can have a relatively high gram capacity and improved structural stability and high-temperature cycling performance, so that the lithium-ion secondary battery using the positive electrode active material can have both a relatively high energy density and high-temperature cycling performance.

In any one of the foregoing embodiments, the precursor of the doping element may be selected from one or more of a silicon oxide, a titanium oxide, a vanadium oxide, a chromium oxide, a germanium oxide, a selenium oxide, a zirconium oxide, a niobium oxide, a molybdenum oxide, a ruthenium oxide, a rhodium oxide, a palladium oxide, an antimony oxide, a tellurium oxide, a cerium oxide, and a tungsten oxide. Optionally, the precursor of the doping element is selected from one or more of $SiO_2$, $SiO$, $TiO_2$, $TiO$, $V_2O_5$, $V_2O_4$, $V_2O_3$, $CrO_3$, $Cr_2O_3$, $GeO_2$, $SeO_2$, $ZrO_2$, $Nb_2O_5$, $NbO_2$, $MoO_2$, $MoO_3$, $RuO_2$, $Ru_2O_3$, $Rh_2O_3$, $PdO_2$, $PdO$, $Sb_2O_5$, $Sb_2O_3$, $TeO_2$, $CeO_2$, $WO_2$, and $WO_3$.

In any one of the foregoing embodiments, the oxygen-containing atmosphere may be an air atmosphere or an oxygen atmosphere.

In any one of the foregoing embodiments, a temperature of the sintering treatment is 700°C to 900°C.

In any of the foregoing embodiments, duration of the sintering treatment may be 5 hours to 25 hours, and optionally 10 hours to 20 hours.

In any one of the foregoing embodiments, the precursor of the doping element may be equally divided into L parts or randomly divided into L parts, and used for doping in L batches, where L is 1 to 5, and optionally 2 or 3. The method optionally includes: mixing the precursor of the positive electrode active material, the lithium source, and a first batch of precursor of the doping element, and performing a first sintering treatment; mixing a product of the first sintering treatment with a second batch of precursor of the doping element, performing a second sintering treatment, and so on, until a product of an $(L-1)^{th}$ sintering treatment is mixed with an $L^{th}$ batch of precursor of the doping element; and performing an $L^{th}$ sintering treatment to obtain the positive electrode active material.

In any one of the foregoing embodiments, a temperature for each sintering treatment is 600°C to 1000°C, optionally 700°C to 900°C, and further optionally 800°C to 850°C.

In any one of the foregoing embodiments, duration for each sintering treatment is 3 hours to 25 hours, and optionally 5 hours to 10 hours.

In any one of the foregoing embodiments, total duration for sintering treatment is 5 hours to 25 hours, and optionally 15 hours to 25 hours.

A third aspect of this application provides a positive electrode plate, including a positive electrode current collector and a positive electrode active substance layer disposed on the positive electrode current collector, where the positive electrode active substance layer includes the positive electrode active material according to the first aspect of this application, or the positive electrode active material obtained in the preparation method according to the second aspect of this application.

The positive electrode plate of this application includes the positive electrode active material, thereby enabling the lithium-ion secondary battery using the positive electrode plate to have a relatively high energy density and high-temperature cycling performance.

A fourth aspect of this application provides a lithium-ion secondary battery, including the positive electrode plate according to the third aspect of this application.

The lithium-ion secondary battery of this application includes the positive electrode plate, thereby enabling the lithium-ion secondary battery to have a relatively high energy density and high-temperature cycling performance.

A fifth aspect of this application provides a battery module, including the lithium-ion secondary battery according to the fourth aspect of this application.

A sixth aspect of this application provides a battery pack, including the lithium-ion secondary battery according to the fourth aspect of this application, or the battery module according to the fifth aspect of this application.

A seventh aspect of this application provides an apparatus, including at least one of the lithium-ion secondary battery according to the fourth aspect of this application, the battery module according to the fifth aspect of this application, or the battery pack according to the sixth aspect of this application.

The battery module, the battery pack, and the apparatus in this application include the lithium-ion secondary battery in this application, and therefore have at least effects that are the same as or similar to those of the lithium-ion secondary battery.

**BRIEF DESCRIPTION OF DRAWINGS**

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.

FIG. 1 is a doping element distribution diagram (the doping element distribution diagram is obtained through an energy dispersive spectroscopy (Energy Dispersive Spectroscopy, EDS), a highlighted spot therein represents a doping element, and the doping element is uniformly distributed in particles) of a cross section (the cross section is obtained by using a cross section polisher (Cross Section Polisher, CP)) of a secondary particle in Example 1.

FIG. 2 is a schematic diagram of locations in relative deviation tests of local mass concentration of a doping element in secondary particles in Examples 1 to 26 and Comparative Examples 1 and 2.

FIG. 3 is a schematic diagram of an embodiment of a lithium-ion secondary battery.

FIG. 4 is an exploded view of FIG. 3.

FIG. 5 is a schematic diagram of an embodiment of a battery module.

FIG. 6 is a schematic diagram of an embodiment of a battery pack.

FIG. 7 is an exploded view of FIG. 6.

FIG. 8 is a schematic diagram of an embodiment of an apparatus using a lithium-ion secondary battery as a power source.

## DESCRIPTION OF EMBODIMENTS

To make the objectives, technical solutions, and beneficial technical effects of this application clearer, the following further describes this application in detail with reference to the embodiments. It should be understood that the embodiments described in this specification are merely intended to interpret this application, but not intended to limit this application.

For simplicity, only some numerical ranges are expressly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual value between endpoints of a range is included in the range. Therefore, each point or individual value may be used as its own lower limit or upper limit to be combined with any other point or individual value or combined with any other lower limit or upper limit to form a range not expressly recorded.

In the description of this specification, it should be noted that, unless otherwise stated, "more than" and "less than" a number means inclusion of the number itself, and "more" in "one or more" means at least two.

In the description of this specification, unless otherwise stated, a term "or (or)" indicates inclusion. For example, a phrase "A or (or) B" means "A, B, or both A and B". More specifically, any one of the following conditions falls with the condition "A or B": A is true (or present) and B is false (or not present); A is false (or not present) and B is true (or present); or both A and B are true (or present).

The foregoing invention content of this application is not intended to describe each of the disclosed embodiments or implementations of this application. The following description illustrates exemplary embodiments in detail by using examples. Throughout this application, guidance is provided by using a series of embodiments and the embodiments may be used in various combinations. In each instance, enumeration is only representative but should not be interpreted as exhaustive.

### Positive electrode active material

A first aspect of this application provides a positive electrode active material, including secondary particles formed by agglomeration of primary particles, where the primary particles include a lithium transition metal oxide, and a transition metal site of the lithium transition metal oxide includes nickel and a doping element; and a Young's modulus E of the primary particles satisfies $175 \text{ GPa} \leq E \leq 220 \text{ GPa}$.

In this specification, a scanning electron microscope/scanning probe microscopy (Scanning Electron Microscope/Scanning Probe Microscopy, SEM/SPM) joint test system can be used to determine a Young's modulus of primary particles. An example determination method is as follows:

A powder of a positive electrode active material was fetched, pulverized with a jet mill, and then diluted with alcohol. The mixture was put into an ultrasonic oscillator to disperse the primary particles in the secondary particles, and was dripped onto a silicon substrate with a pipette. The silicon substrate and a silicon carbide substrate were put into a SEM/SPM joint test instrument (a function of the silicon carbide substrate was to serve as a hard substrate to correct a bending amount of a cantilever during a test, and then a magnitude of an applied force could be obtained). An SPM motion system was controlled by using a computer. After a tip of a scanning probe touched the primary particles, a piezoelectric ceramic was used to control a stepping rate, so that an indentation test was performed by squeezing the primary particles with the tip. In a process of indenting the primary particles with the tip, the cantilever of the probe was bent to deflect a laser light path, and a corresponding pressure value was obtained through conversion by the computer. Displacement was obtained based on an amount of movement of the piezoelectric ceramic, and then a force-displacement curve was obtained. The force-displacement curve obtained through the test was analyzed, and a reduced modulus $E_1$ of the primary particles was calculated with reference to a equation (1):

$$E_1 = \frac{3e}{4\sqrt{R}} \qquad \text{Equation (1)}$$

Herein, e is a constant and can be obtained by fitting the force (F)-displacement (l) curve with an equation $F = el^{1.5}$; and R is a radius of the tip.

Further, a Young's modulus E of the primary particles was calculated by using a equation (2):

$$E = \frac{E_1 \times E_2 \times \left(1-V_1^2\right)}{E_2 - E_1 \times \left(1-V_2^2\right)} \qquad \text{Equation (2)}$$

Herein $E_2$ is the Young's modulus of the tip, Vi is a Poisson's ratio of a sample, and $V_2$ is a Poisson's ratio of the tip.

The positive electrode active material provided in this application includes secondary particles formed by agglomeration of primary particles, where the primary particles include a lithium transition metal oxide, and the transition metal site of the lithium transition metal oxide includes nickel. The positive electrode active material has a characteristic of relatively high charge and discharge voltages and specific capacity, enabling the lithium-ion secondary battery to have relatively high capacity performance and energy density.

The transition metal site of the lithium transition metal oxide further includes a doping element. Doping modification of the lithium transition metal oxide makes the Young's modulus E of the primary particles satisfy that 175 GPa ≤ E ≤ 220 GPa, which ensures that the positive electrode active material has relatively high deformation resistance, prevents the primary particles and the secondary particles from cracking under a pressure, and enables the primary particles to have appropriate toughness, thereby effectively preventing the primary particles from brittlely cracking under an external pressure. In addition, the positive electrode active material can better adapt to intercalation and deintercalation of lithium ions, thereby improving structural stability and the high-temperature cycling stability of the positive electrode active material, and improving high-temperature cycling performance of the lithium-ion secondary battery.

The positive electrode active material can maintain relatively high structural stability under the external pressure, and the primary particles and the secondary particles are not prone to crack, which avoids a disconnection of an electronic conductive channel at a crack and ensures continuity of a conductive network in the positive electrode active substance layer, thereby ensuring that the battery has small impedance, the battery has good electrochemical performance, and the battery has a better capacity extractability and better room-temperature and high-temperature cycling performance. The relatively high structural stability also inhibits side reactions caused by contact between an electrolyte and exposed fresh surfaces of the primary particles and the secondary particles due to crack, thereby reducing consumption of reversible lithium ions, inhibiting an increase in electrode impedance, and improving a cycle capacity retention rate of the battery at a high temperature, so that the battery has better high-temperature cycling performance.

In this specification, the "pressure" and the "external pressure" may include a pressure of cold pressing performed by an apparatus in a process of preparing a positive electrode plate by using the positive electrode active material, and a pressure such as an expansion force applied on the positive electrode active material during charging and discharging cycles of the battery.

The positive electrode active material in the embodiments of this application helps ensure relatively high capacity performance, energy density, and high-temperature cycling performance of the lithium-ion secondary battery. In a case that the lithium-ion secondary battery using the positive electrode active material in this application is applied to an electric vehicle, the electric vehicle can obtain a long endurance mileage.

In some optional embodiments, the Young's modulus E of the primary particles may be less than or equal to 220 GPa, 218 GPa, 216 GPa, 215 GPa, 212GPa, 210 GPa, 208 GPa, 206 GPa, 205 GPa, 204 GPa, 202 GPa, or 200 GPa. E may be greater than or equal to 175 GPa, 177 GPa, 180 GPa, 182 GPa, 184 GPa, 186 GPa, 188 GPa, 191 GPa, 193 GPa, 195 GPa, 196 GPa, or 198 GPa.

Optionally, 180 GPa ≤ E ≤ 210 GPa. Optionally, 190 GPa ≤ E ≤ 205 GPa. Optionally, 195 GPa ≤ E ≤ 205 GPa. T foregoing effects can be better played, improving high-temperature cycling performance of the battery.

The doping element may be selected from one or more of transition metal elements other than nickel, and elements in Group IIA to Group VIA other than carbon, nitrogen, oxygen, and sulfur. Optionally, there is relatively strong bond energy between the doping element and oxygen. Further, optionally, the bond energy between the doping element and oxygen is higher than Ni-O bond energy. The doping element and oxygen have the relatively strong bond energy, which can better improve the Young's modulus E of the primary particles, effectively stabilize a structure of the positive electrode active material, and further improve the high-temperature cycling performance of the battery.

In some embodiments, the doping element in an oxidation state has a valence higher than +3. Optionally, the doping element in the oxidation state has a valence above +3. For example, the doping element in the oxidation state has one or more of valences of +4, +5, +6, +7, and +8, or for another example, one or more of +4, +5, and +6.

Herein, "the valence of the doping element in the oxidation state" refers to the valence of the doping element after delithiation of the positive electrode active material, and in particular, the valence of the doping element in the positive electrode active material when the battery with a positive electrode including the positive electrode active material in this application is charged to a preset charging cut-off voltage within a range for reversible charging and discharging. The preset charging cut-off voltage is one of characteristic parameters of the battery that are set based on the types of the positive electrode active material, the negative electrode active material, and the electrolyte, and the like.

The doping element in an oxidation state has a valence higher than +3, or in particular above +3, and in this case, the doping element can contribute more electrons during charging and discharging processes, to support a positive electrode in releasing more lithium ions, thereby increasing charging and discharging voltages and the capacity extractability of the lithium-ion secondary battery, so that the energy density of the battery is improved.

In addition, a doping element in a high-valence state has a stronger capability of binding with oxygen, thereby facilitating improvement of the Young's modulus E of the primary particles and the structural stability of the positive electrode active material, so that the high-temperature cycling performance of the battery is further improved.

In some embodiments, the doping element may be selected from one or more of Si, Ti, V, Cr, Ge, Se, Zr, Nb, Mo, Ru, Rh, Pd, Sb, Te, Ce, and W. Optionally, the doping element includes one or more of Si, Zr, Nb, Ru, Pd, Sb, Te, and W. The provided doping element can better implement the foregoing effects, so that the lithium-ion secondary battery has the relatively high energy density and good room-temperature and high-temperature cycling performance.

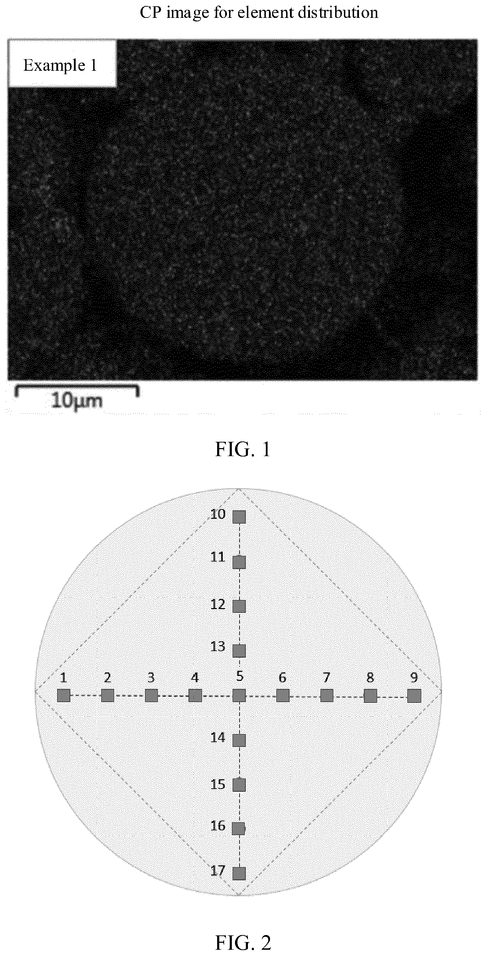

In some optional embodiments, referring to FIG. 1, the doping element is uniformly distributed in the secondary particles. Further, a relative deviation of local mass concentration of the doping element in the secondary particles may be less than 30%, optionally less than 20%, and further optionally less than 16%, or less than 13%.

In this specification, the local mass concentration of the doping element in the secondary particles is a mass concentration of the doping element in all elements in a finite volume element at any selected site in the secondary particles, and may be obtained by testing element concentration distribution through EDX (Energy Dispersive X-Ray Spectroscopy, energy dispersive X-ray spectroscopy) or EDS element analysis in combination with TEM (Transmission Electron Microscope, transmission electron microscope) or SEM (Scanning Electron Microscope, scanning electron microscope) single-point scanning, or using other similar manners. When EDX or EDS element analysis in combination with TEM or SEM single-point scanning is performed, the mass concentrations of the doping element in $\mu g/g$ at different sites in the secondary particles are respectively denoted as $\eta_1$, $\eta_2$, $\eta_3$, ..., $\eta_n$, where n is a positive integer greater than 15 (as shown in FIG. 2).

An average mass concentration of the doping element in the secondary particles is a mass concentration of the doping element in all elements within a single secondary particle, and may be obtained by testing element concentration distribution through EDX or EDS element analysis in combination with TEM or the SEM plane scanning, or using other similar manners. When the test is performed in the manner of testing the element concentration distribution through EDX or EDS element analysis in combination with TEM or the SEM plane scanning, the testing plane includes all test sites in the foregoing single-point testing (as shown in FIG. 2). The average mass concentration of the doping element in the secondary particles is denoted as $\bar{\eta}$ in $\mu g/g$.

A relative deviation $\sigma$ of local mass concentration of the doping element in the secondary particles is calculated based on the following equation (3):

$$\sigma = \frac{\max\left\{\left|\eta_1 - \bar{\eta}\right|, \left|\eta_2 - \bar{\eta}\right|, \left|\eta_3 - \bar{\eta}\right|, \cdots, \left|\eta_n - \bar{\eta}\right|\right\}}{\bar{\eta}} \qquad \text{Equation (3)}$$

The relative deviation of the local mass concentration of the doping element in the secondary particles is less than 30% and optionally less than 20%, which means that the doping element is highly uniformly distributed in the secondary particles. Properties throughout the interior of the uniformly doped positive electrode active material particles are consistent, and migration and diffusion capabilities of lithium ions in different internal zones of the particles are at a same level. In addition, throughout the interior of the uniformly doped particles, the Young's modulus E is close, that is, portions of the particles have close deformation resistance and toughness, and therefore, internal stresses of the particles are evenly distributed, the structural stability of the particles is relatively high, and the particles are not prone to crack. Therefore, both the capacity extractability and the high-temperature cycling performance of the positive electrode active material can be improved, thereby further improving the capacity performance, energy density, and high-temperature cycling performance of the lithium-ion secondary battery.

A smaller the relative deviation of the local mass concentration of the doping element in the secondary particles means a more uniform distribution of the doping element in the secondary particles, and can better improve the overall structural stability, capacity extractability, and high-temperature cycling performance of the positive electrode active material.

In some optional embodiments, a true doping concentration $\Phi$ of the positive electrode active material satisfies $1500 \ \mu g/cm^3 \leq \Phi \leq 60000 \ \mu g/cm^3$. Optionally, $2300 \ \mu g/cm^3 \leq \Phi \leq 50000 \ \mu g/cm^3$, $3000 \ \mu g/cm^3 \leq \Phi \leq 30000 \ \mu g/cm^3$, $14800 \ \mu g/cm^3 \leq \Phi \leq 36700 \ \mu g/cm^3$, $14800 \ \mu g/cm^3 \leq \Phi \leq 28900 \ \mu g/cm^3$, or $24800 \ \mu g/cm^3 \leq \Phi \leq 25500 \ \mu g/cm^3$.

In this specification, the true doping concentration $\Phi$ of the positive electrode active material can be calculated according to the following equation (4):

$$\varphi = \omega \times \rho_{true} \qquad\qquad \text{Equation (4)}$$

In the equation (2), $\Phi$ is the true doping concentration of the positive electrode active material in $\mu g/cm^3$.

Herein, $\rho_{true}$ is true density of the positive electrode active material in $g/cm^3$, and is equal to a ratio of a mass of the positive electrode active material to a true volume of the positive electrode active material. The true volume is a true volume of a solid substance and excludes pores inside the particles. Herein, $\rho_{true}$ can be determined using instruments and methods well-known in the art, for example, a gas volume method, where a powder true densitometer can be used.

Herein, $\omega$ is a mass concentration of the doping element in the positive electrode active material in $\mu g/g$, that is, the mass of the doping element contained per gram of the positive electrode active material. $\omega$ represents the concentration of the doping element in the overall macroscopic positive electrode active material and including doping element distributed into the secondary particles of the positive electrode active material, doping element enriched in other phases on a surface of the positive electrode active material, and doping element embedded among the positive electrode active material particles. $\omega$ can be obtained through the absorption spectrum test of the positive electrode active material solution, for example ICP (Inductive Coupled Plasma Emission Spectrometer, inductive coupled plasma emission spectrometer) test or XAFS (X-ray absorption fine structure spectroscopy, X-ray absorption fine structure) test.

The true doping concentration of the positive electrode active material is within the foregoing range, which improves the Young's modulus E of the primary particles and enables the positive electrode active material to have a good layered structure, ensuring that the positive electrode active material provides a good carrier for intercalation and deintercalation of lithium ions, so that irreversible consumption of active lithium ions is effectively reduced and the positive electrode active material has a higher initial capacity and cycling capacity retention rate, thereby improving the energy density and the high-temperature cycling performance of the battery.

In addition, the true doping concentration of the positive electrode active material is within the foregoing range, and it is also ensured that the doping element is distributed into a transition metal layer and prevented from entering a lithium layer, which ensures that the particles have a relatively high capability in transmission and diffusion of the lithium ions, so that the battery has a relatively high capacity extractability and cycling performance.

The true density $\rho_{true}$ of the positive electrode active material optionally satisfies $4.6 \ g/cm^3 \leq \rho_{true} \leq 4.9 \ g/cm^3$. The positive electrode active material can have a relatively high specific capacity, thereby improving the capacity performance and the energy density of the battery.

In some optional embodiments, a deviation $\varepsilon$ of the mass concentration $\omega$ of the doping element in the positive electrode active material with respect to an average mass concentration $\overline{\eta}$ of the doping element in the secondary particles satisfies $\varepsilon < 50\%$. Optionally, $\varepsilon \leq 30\%$. Optionally, $\varepsilon \leq 20\%$. Further optionally, $\varepsilon \leq 13\%$ or $\varepsilon \leq 10\%$.

A deviation of the mass concentration $\omega$ of the doping element in the positive electrode active material with respect to the average mass concentration $\overline{\eta}$ of the doping element in the secondary particles is calculated according to the following equation (5):

$$\varepsilon = \frac{\left| \omega - \overline{\eta} \right|}{\omega} \qquad\qquad \text{Equation (5)}$$

The deviation of a mass concentration $\omega$ of the doping element in the positive electrode active material relative to an average mass concentration $\overline{\eta}$ of the doping element in the secondary particles is within the foregoing range. This means that the doping element is successfully distributed into the secondary particles, the concentration of doping element distributed in other phases on the surface of the secondary particles and doping element embedded in gaps between the positive electrode active material particles is relatively low, the positive electrode active material shows good macro and micro consistency, and has a uniform structure and high particle stability, which is beneficial to enabling the positive electrode active material to have a relatively high capacity extractability, and room-temperature and high-temperature cycling performance.

In the positive electrode active material provided in the embodiments of this application, the lithium transition metal oxide has a layered crystal structure. In some optional embodiments, in the transition metal layer of the lithium transition metal oxide, the number of moles of nickel is more than 50% of a total number of moles in the transition metal layer, further more than 60%, still further more than 70%, or yet further more than 80%. A high-nickel positive electrode active material has a characteristic of a higher specific capacity, thereby improving the capacity performance and energy density of the lithium-ion secondary battery.

In some examples, the lithium transition metal oxide may satisfy the chemical formula $Li_{1+a}[Ni_xCo_yMn_zM_b]O_2$, where M is the preceding doping element, M is used for doping at the transition metal site, $0.5 \leq x < 1$, $0 \leq y < 0.3$, $0 \leq z < 0.3$, $0 \leq a < 0.2$, $0 \leq b < 0.3$, and $x + y + z + b = 1$. The high-nickel positive electrode active material has a high specific capacity characteristic and high structural stability, so that the lithium-ion secondary battery has high capacity performance and energy density, and good room-temperature and high-temperature cycling performance.

Optionally, $0 < y < 0.3$ and $0 < z < 0.3$. The high-nickel ternary positive electrode active material has a high energy density and good structural stability, and therefore, the battery has a high energy density and long cycling life.

Optionally, M is selected from one or more of Si, Ti, V, Cr, Ge, Se, Zr, Nb, Mo, Ru, Rh, Pd, Sb, Te, Ce, and W. Optionally, M includes one or more of Si, Zr, Nb, Ru, Pd, Sb, Te, and W. Because the doping element M has a relatively high valence in an oxidation state, which exceeds an average valence (+3) of transition metals Ni, Co, and Mn in the high-nickel ternary positive electrode active material, this means that these doping elements can contribute more electrons during the charging process, and therefore, the positive electrode active material releases more lithium ions, to increase charging and discharging voltages and the capacity extractability of the lithium-ion secondary battery, so that the lithium-ion secondary battery has higher capacity performance and energy density. The Young's modulus E of the primary particles of the positive electrode active material can be effectively improved by using the doping element M, so that the positive electrode active material has better deformation resistance and better toughness, and is not prone to crack, thereby improving the cycling performance of the battery.

In some other examples, the lithium transition metal oxide may satisfy the chemical formula $Li_{1+c}[Ni_{r-d}Co_sMn_tM'_d]O_2$, where M' is the doping element, M' partially substitutes nickel in a transition metal layer, $0.5 \leq r - d < 1$, $0 \leq s < 0.3$, $0 \leq t < 0.3$, $0 < c < 0.2$, $0 < d < 0.3$, and $r + s + t = 1$. The high-nickel positive electrode active material has a high specific capacity characteristic and high structural stability, so that the lithium-ion secondary battery has high capacity performance and energy density, and good room-temperature and high-temperature cycling performance.

Optionally, $0 < s < 0.3$ and $0 < t < 0.3$. The high-nickel ternary positive electrode active material has a high energy density and good structural stability, and therefore, the battery has a high energy density and long cycling life.

Optionally, M' is selected from one or more of Si, Ti, V, Cr, Ge, Se, Zr, Nb, Mo, Ru, Rh, Pd, Sb, Te, Ce, and W. Optionally, M' includes one or more of Si, Zr, Nb, Ru, Pd, Sb, Te, and W. Similarly, the doping element M' helps enable the lithium-ion secondary battery to have higher capacity performance, energy density, and cycling performance.

The various lithium transition metal oxides in the foregoing examples can be separately independently used for the positive electrode active material, or a combination of any two or more lithium transition metal oxides can be used for the positive electrode active material.

In the embodiments of this application, a volume average particle size $D_v50$ of the positive electrode active material is optionally 5 μm to 20 μm, further optionally 8 μm to 15 μm, or also optionally 9 μm to 11 μm. $D_v50$ of the positive electrode active material is within the foregoing range, and migration paths of lithium ions and electrons in the material are relatively short, which can further improve transmission and diffusion performance of lithium ions and the electrons in the positive electrode active material and reduce polarization of the battery, thereby improving the cycling performance and rate performance of the lithium-ion secondary battery. In addition, the positive electrode active material can have a relatively high compacted density, thereby improving the energy density of the battery.

$D_v50$ of the positive electrode active material is within the foregoing range, which helps reduce side reactions of the electrolyte on the surface of the positive electrode active material and reduce agglomeration of particles in the positive electrode active material, thereby improving the cycling performance and safety performance of the positive electrode active material.

In the embodiments of this application, a specific surface area of the positive electrode active material may be optionally 0.2 m²/g to 1.5 m²/g, and further optionally 0.3 m²/g to 1 m²/g. The specific surface area of the positive electrode active material is within the foregoing range, which ensures that the positive electrode active material has a relatively high active specific surface area, and also helps reduce the side reactions of the electrolyte on the surface of the positive electrode active material, thereby improving the capacity extractability and cycling life of the positive electrode active material, and further avoiding agglomeration of particles in the positive electrode active material during slurry preparation, charging, and discharging, to improve the energy density and cycling performance of the battery.

In the embodiments of this application, tap density of the positive electrode active material may be optionally 2.3 $g/cm^3$ to 2.8 $g/cm^3$. The tap density of the positive electrode active material is within the foregoing range, so that the lithium-ion secondary battery has relatively high capacity performance and energy density.

In the embodiments of this application, compacted density of the positive electrode active material under a pressure of 5 tons (equivalent to 49 kN) may be optionally 3.1 $g/cm^3$ to 3.8 $g/cm^3$. The tap density of the positive electrode active material is within the foregoing range, so that the lithium-ion secondary battery has relatively high capacity performance and energy density, and also has good room-temperature cycling performance and high-temperature cycling performance.

Optionally, the morphology of the positive electrode active material according to the embodiments of this application is one or more of a sphere and a sphere-like body.

In this specification, a volume average particle size $D_v50$ of the positive electrode active material has a well-known definition in the art, and is also referred to as a median particle size, which represents a particle size corresponding to a volume distribution of 50% of the positive electrode active material particles. The average particle size $D_v50$ of the positive electrode active material can be determined using instruments and methods that are well known in the art, for example, a laser particle size analyzer (such as the Mastersizer 3000 type from Malvern Instruments Ltd. in UK).

The specific surface area of the positive electrode active material has a well-known definition in the art, and may be determined by using instruments and methods that are well known in the art, for example, tested by using a nitrogen-adsorption specific surface area test method and calculated in a BET (Brunauer Emmett Teller) method. The nitrogen-adsorption specific surface area can be analyzed using a NOVA 2000e specific surface area and aperture analyzer from Quantachrome in USA. As a specific example, a test method was as follows: 8.000 g to 15.000 g of the positive electrode active material were put into a weighed empty sample tube, the positive electrode active material was stirred well and weighed, the sample tube was put into the NOVA 2000e degassing station for degassing, a total mass of the degassed positive electrode active material and the sample tube was weighed, and a mass G of the positive electrode active material obtained after degassing was calculated by subtracting the mass of the empty sample tube from the total mass. The sample tube was put into NOVA 2000e, adsorption amounts of nitrogen on surface of the positive electrode active material under different relative pressures were determined, an adsorption amount at a monomolecular layer was calculated based on the Brunauer-Emmett-Teller multilayer adsorption theory and an equation thereof, then a total surface area A of the positive electrode active material was calculated, and the specific surface area of the positive electrode active material was calculated by A/G.

The tap density of the positive electrode active material has a well-known definition in the art, and may be determined by using instruments and methods that are well known in the art, for example, may be conveniently determined using a tap density meter (for example, FZS4-4B type).

The compacted density of the positive electrode active material has a well-known definition in the art, and may be tested by using instruments and methods that are well known in the art, for example, may be conveniently tested using an electronic pressure tester (for example, UTM7305 type).

The following describes a preparation method of a positive electrode active material by using an example. Any one of the foregoing positive electrode active materials can be prepared in the preparation method. The preparation method includes:

mixing a precursor of the positive electrode active material, a lithium source, and a precursor of the doping element and performing a sintering treatment, to obtain a positive electrode active material.

The positive electrode active material precursor may be one or more of oxides, hydroxides, and carbonates containing Ni and optionally Co and/or Mn in a stoichiometric ratio, for example, hydroxides containing Ni, Co and Mn in a stoichiometric ratio.

The positive electrode active material precursor can be obtained in a method well-known in the art, for example, may be prepared in a co-precipitation method, a gel method, or a solid phase method.

In an example, a Ni source, a Co source, and a Mn source were dispersed in a solvent to obtain a mixed solution; the mixed solution, a strong-alkali solution, and a complexing agent solution were simultaneously pumped into a reactor with a stirring function in a continuous co-current reaction manner; pH of a reaction solution was controlled to be 10 to 13, the temperature in the reactor was 25°C to 90°C, and an inert gas was introduced for protection during the reaction; after the reaction is completed, the hydroxides containing Ni, Co and Mn were obtained after aging, filtering, washing, and vacuum drying.

The Ni source can be a soluble nickel salt. For example, the Ni source is one or more of nickel sulfate, nickel nitrate, nickel chloride, nickel oxalate, and nickel acetate. For another example, the Ni source is one or more of nickel sulfate and nickel nitrate, or is nickel sulfate. The Co source may be a soluble cobalt salt. For example, the Co source is one or more of cobalt sulfate, cobalt nitrate, cobalt chloride, cobalt oxalate, and cobalt acetate. For another example, the Co source is one or more of cobalt sulfate and cobalt nitrate, or is cobalt sulfate. The Mn source may be a soluble manganese salt. For example, the Mn source is one or more of manganese sulfate, manganese nitrate, manganese chloride, manganese oxalate, and manganese acetate. For another example, the Mn source is one or more of manganese sulfate and manganese nitrate, or is manganese sulfate.

The strong alkali may be one or more of LiOH, NaOH, and KOH. For example, the strong alkali is NaOH. The complexing agent may be one or more of ammonia, ammonium sulfate, ammonium nitrate, ammonium chloride, ammonium citrate, and disodium ethylenediaminetetraacetic acid (EDTA). For example, the complexing agent is ammonia.

There is no special limitation on the solvents of the mixed solution, the strong-alkali solution, and the complexing agent solution. For example, the solvents of the mixed solution, the strong-alkali solution, and the complexing agent solution are each independently one or more of deionized water, methanol, ethanol, acetone, isopropanol, and n-hexanol. For example, the solvents are the deionized water.

The inert gas inserted during the reaction is, for example, one or more of nitrogen, argon, and helium.

The foregoing lithium source can be one or more of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$). Further, the lithium source is one or more of the lithium carbonate, the lithium hydroxide, and the lithium nitrate; or further, the lithium source is the lithium carbonate.

The doping element precursor may be one or more of an oxide, a nitric acid compound, a carbonic acid compound, a hydroxide compound, and an acetic acid compound of the doping element. For example, the doping element precursor is the oxide of the doping element, such as one or more of a silicon oxide (such as $SiO_2$ and SiO), a titanium oxide (such as $TiO_2$ and TiO), a vanadium oxide (such as $V_2O_5$, $V_2O_4$, and $V_2O_3$), a chromium oxide (such as $CrO_3$ and $Cr_2O_3$), a germanium oxide (such as $GeO_2$), a selenium oxide (such as $SeO_2$), a zirconium oxide (such as $ZrO_2$), a niobium oxide (such as $Nb_2O_5$ and $NbO_2$), a molybdenum oxide (such as $MoO_2$ and $MoO_3$), a ruthenium oxide (such as $Ru_2O_3$ and $RuO_2$), a rhodium oxide (such as $Rh_2O_3$), a palladium oxide (such as $PdO_2$ and PdO), an antimony oxide (such as $Sb_2O_5$ and $Sb_2O_3$), a tellurium oxide (such as $TeO_2$), a cerium oxide (such as $CeO_2$), and a tungsten oxide (such as $WO_2$ and $WO_3$).

The positive electrode active material precursor, the lithium source, and the doping element precursor can be mixed by using a ball mill mixer or a high-speed mixer. The mixed materials are added into an atmosphere sintering furnace for sintering. A sintering atmosphere is an oxygen-containing atmosphere, for example, an air atmosphere or an oxygen atmosphere. The sintering temperature is, for example, 600°C to 1000°C. Optionally, the sintering temperature is 700°C to 900°C, so that the doping element has relatively high distribution evenness. The sintering time can be adjusted based on an actual situation, for example, 5 hours to 25 hours, or for another example, 10 hours to 20 hours.

It should be noted that during the preparation of the positive electrode active material, there are a plurality of theoretically feasible manners to control formation of the secondary particles and influence the Young's modulus of the primary particles, for example, the sintering temperature and/or the sintering duration can be increased or extended within a specific range to improve the Young's modulus of the primary particles. In this application, some measures of a doping method for solid-phase sintering are listed. Through manners of adjusting the number of sintering times, doping the doping element in batches, controlling overall sintering time and the sintering temperature, and the like, the positive electrode active material of the lithium transition metal oxide with a different Young's modulus for the primary particles is obtained. It should be understood that the methods described in this specification are merely intended to interpret this application, but not intended to limit this application.

In an example, the doping element precursor can be divided into L batches for doping with the doping element, where L may be 1 to 5, such as 2 to 3. In these embodiments, the preparation method of the positive electrode active material may include the following steps: mixing the positive electrode active material precursor, the lithium source, and a first batch of the doping element precursor, and performing a first sintering treatment; mixing a product of the first sintering treatment with a second batch of the doping element precursor, performing a second sintering treatment, and so on, until a product of an (L-1)th sintering treatment is mixed with an Lth batch of the doping element precursor; and an Lth sintering treatment is performed to obtain the positive electrode active material.

The doping element precursor can be equally divided into L parts or randomly divided into L parts to perform doping in L batches.

Temperatures for sintering treatments are the same or different. Periods of time for the sintering treatments are the same or different. A person skilled in the art may adjust the sintering temperature and duration according to the type and concentration of the doping element. For example, the temperature for each sintering treatment may be 600°C to 1000°C, for example, 700°C to 900°C, and for another example, 800°C to 850°C. Duration for each sintering treatment may be 3 hours to 25 hours, and optionally 5 hours to 10 hours. The total sintering time can be 5 hours to 25 hours, for example, 15 hours to 25 hours.

For an element that is more difficult to dope, such as a doping element with a large atomic radius, doping evenness can be improved by increasing the sintering temperature and/or extending the sintering time.

In some embodiments, a sintered product may alternatively be crushed and sieved, to obtain a positive electrode active material with optimized particle size distribution and specific surface area. There is no special limitation on a crushing method, which can be selected according to an actual need, such as, a particle crusher.

**Positive electrode plate**

This application provides a positive electrode plate that uses any one or more of the positive electrode active materials in this application.

The positive electrode plate in the embodiments of this application uses the positive electrode active material in this application, the lithium-ion secondary battery can have good room-temperature and high-temperature cycling performance and a relatively high energy density.

Specifically, the positive electrode plate includes a positive electrode current collector and a positive electrode active substance layer provided on at least one surface of the positive electrode current collector. For example, the positive electrode current collector includes two opposite surfaces in its thickness direction, and the positive electrode active substance layer is provided on either or both of the two surfaces of the positive electrode current collector.

The positive electrode active substance layer includes the positive electrode active material in this application.

In addition, the positive electrode active substance layer may further include a conductive agent and a binder. Types of the conductive agent and the binder in the positive electrode active substance layer are not specifically limited in this application, and may be selected based on an actual need.

In an example, the conductive agent may be one or more of graphite, superconducting carbon, acetylene black, carbon black, Ketjen black, carbon dots, carbon nanotubes, graphene, and carbon nanofibers. The binder may be one or more of styrene-butadiene rubber (SBR), water-borne acrylic resin (water-based acrylic resin), carboxymethyl cellulose (CMC), polyvinylidene fluoride (PVDF), polytetrafluoroethylene (PTFE), polyvinyl butyral (PVB), ethylene vinyl acetate (EVA), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylic resin, and polyvinyl alcohol (PVA).

The positive electrode current collector may use a metal foil material or a porous metal plate with good electrical conductivity and mechanical properties, and a material of the positive electrode current collector may be one or more of aluminum, copper, nickel, titanium, silver, and their respective alloys. The positive electrode current collector is, for example, aluminum foil.

The positive electrode plate may be prepared by using a conventional method in the art. For example, the positive electrode active material, the conductive agent, and the binder are dispersed in a solvent which may be N-methylpyrrolidone (NMP) or deionized water, to obtain a uniform positive electrode slurry. The positive electrode slurry is applied on the positive electrode current collector, and the positive electrode plate is obtained after processes such as drying and roll-in.

## LITHIUM-ION SECONDARY BATTERY

The application provides a lithium-ion secondary battery that includes a positive electrode plate, a negative electrode plate, a separator, and an electrolyte, where the positive electrode plate is any positive electrode plate in this application.

The lithium-ion secondary battery in this application uses the positive electrode plate in this application, thereby having good room-temperature and high-temperature cycling performance and a relatively high energy density.

The negative electrode plate may be a metal lithium sheet.

The negative electrode plate may include a negative electrode current collector and a negative electrode active substance layer provided on at least one surface of the negative electrode current collector. For example, the negative electrode current collector includes two opposite surfaces in its thickness direction, and the negative electrode active substance layer is provided on either or both of the two surfaces of the negative electrode current collector.

The negative electrode active substance layer includes a negative electrode active material. The embodiments of this application impose no specific limitation on a type of the negative electrode active material, and the negative electrode active material maybe selected based on an actual need. In an example, the negative electrode active material may be one or more of natural graphite, artificial graphite, mesocarbon microbeads (MCMB), hard carbon, soft carbon, silicon, a silicon-carbon composite, $SiO_m$ ($0 < m < 2$, for example, m = 1), a Li-Sn alloy, a Li-Sn-O alloy, Sn, SnO, $SnO_2$, lithium titanate $Li_4Ti_5O_{12}$ with a spinel-structure, an Li-Al alloy, and a lithium metal.

The negative electrode active substance layer may further include a conductive agent and a binder. The embodiments of this application impose no specific limitation on types of the conductive agent and the binder in the negative electrode active substance layer, and the conductive agent and the binder may be selected based on an actual need. In an example, the conductive agent is one or more of graphite, superconducting carbon, acetylene black, carbon black, Ketjen black, carbon dots, carbon nanotubes, graphene, and carbon nanofibers. The binder is one or more of styrene-butadiene rubber (SBR), polyvinylidene fluoride (PVDF), polytetrafluoroethylene (PTFE), polyvinyl butyral (PVB), and water-based acrylic resin.

The negative electrode active substance layer further optionally includes a thickener, such as sodium carboxymethyl cellulose (CMC-Na).

The negative electrode current collector may use a metal foil material or a porous metal plate with good electrical conductivity and mechanical properties, and a material of the negative electrode current collector may be one or more of copper, nickel, titanium, iron, and their respective alloys. The negative electrode current collector is, for example, copper foil.

The negative electrode plate may be prepared by using a conventional method in the art. For example, the negative electrode active material, the conductive agent, the binder, and the thickener are dispersed in a solvent which may be N-methylpyrrolidone (NMP) or deionized water, to obtain a uniform negative electrode slurry. The negative electrode slurry is applied on the negative electrode current collector, and the negative electrode plate is obtained after processes such as drying and roll-in.

In the lithium-ion secondary battery in the embodiments of this application, the electrolyte may be a solid electrolyte, such as a polymer electrolyte or an inorganic solid electrolyte, but the electrolyte is not limited thereto. The electrolyte also may be a liquid electrolyte. The liquid electrolyte includes a solvent and a lithium salt dissolved in the solvent.

The solvent may be a non-aqueous organic solvent, for example, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), Methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB). For example, the solvent is more than two types.

The lithium salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroborate), LiFSI (lithium bis(fluorosulfonyl)bisfluorosulfonyl imide), LiTFSI (lithium bis-trifluoromethanesulfonimidetrifluoromethanesulfon imide), LiTFS (lithium trifluoromethanesulfonat), LiDFOB (lithium difluorooxalatoborate), LiBOB (lithium bisoxalatoborate), $LiPO_2F_2$ (lithium difluorophosphate), LiDFOP (lithium difluorophosphate), and LiTFOP (lithium tetrafluoro oxalate phosphate). For example, the lithium salt may be one or more of $LiPF_6$ (lithium hexafluorophosphate), $LiBF_4$ (lithium tetrafluoroborate), LiBOB (lithium bisoxalatoborate), LiDFOB (lithium difluorooxalatoborate), LiTFSI (lithium bis-trifluoromethanesulfonimidetrifluoromethanesulfon imide), and LiFSI (lithium bis(fluorosulfonyl)bisfluorosulfonyl imide).

The liquid electrolyte further optionally includes another additive, such as one or more of vinylene carbonate (VC), vinyl ethylene carbonate (VEC), fluoroethylene carbonate (FEC), difluoroethylene carbonate (DFEC), trifluoromethyl ethylene carbonate (TFPC), succinonitrile (SN), adiponitrile (ADN), glutaronitrile (GLN), hexanetricarbonitrile (HTN), 1,3-propane sultone (1,3-PS), ethylene sulfate (DTD), methylene methane disulfonate (MMDS), 1-propene-1,3-sultone (PST), 4-methyl ethylene sulfate (PCS), 4-ethyl ethylene sulfate (PES), 4-propyl ethylene sulfate (PEGLST), propylene sulfate (TS), 1,4-butane sultone (1,4- BS), ethylene sulfite (DTO), dimethyl sulfite (DMS), diethyl sulfite (DES), sulfonate cyclic quaternary ammonium salt, tris(trimethylsilane) phosphate (TMSP), and tris(trimethylsilane) borate (TMSB), but is not limited thereto.

The lithium-ion secondary battery in the embodiments of this application imposes no particular limitation on the separator, and any well-known porous separator with electrochemical stability and mechanical stability may be selected, for example, a mono-layer or multi-layer membrane of one or more of glass fiber, nonwoven fabric, polyethylene (PE), polypropylene (PP), and polyvinylidene fluoride (PVDF).

The positive electrode plate and the negative electrode plate are stacked alternately with a separator provided between the positive electrode plate and the negative electrode plate for separation, to obtain a battery cell, or a battery cell may be obtained after the stack is wound. The battery cell was placed in a housing, an electrolyte was injected, and the housing was sealed, to obtain the lithium-ion secondary battery.

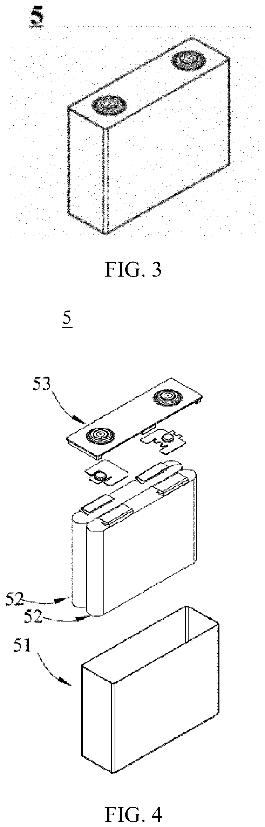

This application has no particular limitation on a shape of the lithium-ion secondary battery, and the lithium-ion battery may be of a cylindrical, square, or any other shape. FIG. 3 shows a lithium-ion secondary battery 5 of a square structure as an example.

In some embodiments, the secondary battery may include an outer package. The outer package is used for encapsulating the positive electrode plate, the negative electrode plate, and the electrolyte.

In some embodiments, referring to FIG. 4, the outer package may include a housing 51 and a cover plate 53. The housing 51 may include a bottom plate and a side plate connected to the bottom plate, and the bottom plate and the side plate are enclosed to form an accommodating cavity. The housing 51 has an opening connected to the accommodating cavity, and the cover plate 53 can cover the opening to close the accommodating cavity.

The positive electrode plate, the negative electrode plate, and the separator may be wound or laminated to form a battery core 52. The jelly roll 52 is encapsulated in the accommodating cavity. The electrolyte may be a liquid electrolyte infiltrated in the jelly roll 52. The lithium-ion secondary battery 5 may contain one or more jelly rolls 52, which can be adjusted according to a requirement.

In some embodiments, the outer package of the lithium-ion secondary battery may be a hard housing, such as a hard plastic housing, an aluminum housing, a steel housing, or the like. The outer package of the secondary battery may be a soft package, for example, a soft bag. A material of the soft package may be plastic, for example, may include one or more of polypropylene (PP), polybutylene terephthalate (PBT), polybutylene succinate (PBS), and the like.

In some embodiments, lithium-ion secondary batteries may be assembled into a battery module, and the battery module may include a plurality of lithium-ion secondary batteries. The specific quantity may be adjusted based on application and capacity of the battery module.

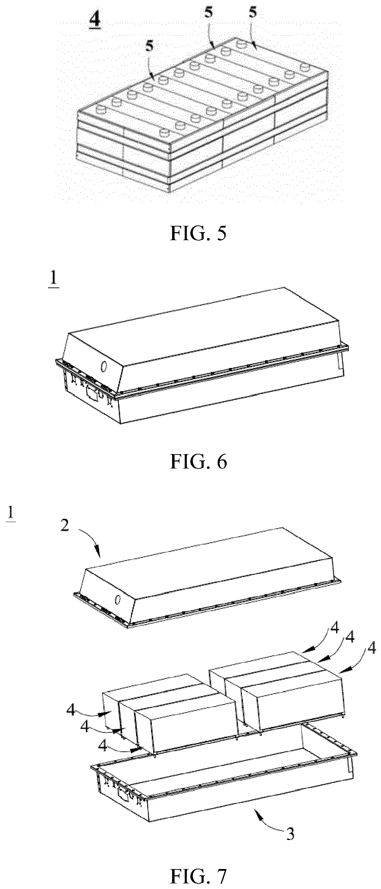

FIG. 5 shows a battery module 4 used as an example. Referring to FIG. 5, in the battery module 4, a plurality of lithium-ion secondary batteries 5 may be sequentially arranged along a length direction of the battery module 4. Certainly, the apparatuses may be arranged in any other manner. Further, the plurality of lithium-ion secondary batteries 5 may be fixed by using fasteners.

Optionally, the battery module 4 may further include a housing with an accommodating space, and the plurality of lithium-ion secondary batteries 5 are accommodated in the accommodating space.

In some embodiments, battery modules may be further assembled into a battery pack, and a quantity of battery modules included in the battery pack may be adjusted based on application and capacity of the battery pack.

FIG. 6 and FIG. 7 show a battery pack 1 used as an example. Referring to FIG. 6 and FIG. 7, the battery pack 1 may include a battery box and a plurality of battery modules 4 disposed in the battery box. The battery box includes an upper case body 2 and a lower case body 3. The upper case body 2 can cover the lower case body 3 to form an enclosed space for accommodating the battery modules 4. The plurality of battery modules 4 may be arranged in the battery box in any manner.

This application further provides an apparatus, including at least one of the lithium-ion secondary battery, the battery module, or the battery pack according to this application. The lithium-ion secondary battery, the battery module, or the battery pack may be used as a power source for the apparatus, or an energy storage unit of the apparatus. The apparatus may be, but is not limited to, a mobile device (for example, a mobile phone or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium-ion secondary battery, a battery module, or a battery pack may be selected for the apparatus according to requirements for using the apparatus.

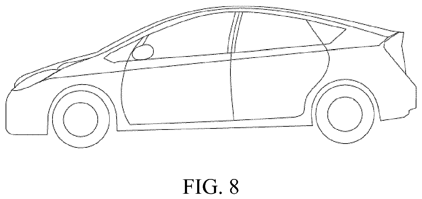

FIG. 8 shows an apparatus used as an example. The apparatus is a full electric vehicle, a hybrid electric vehicle, a plug-in hybrid electric vehicle, or the like. To meet a requirement of the apparatus for high power and a high energy density of a secondary battery, a battery pack or a battery module may be used.

In another example, the apparatus may be a mobile phone, a tablet computer, a notebook computer, or the like. The apparatus is generally required to be light and thin, and may use a lithium-ion secondary battery as its power supply.

## Examples

Content disclosed in this application is described in detail in the following embodiments. These embodiments are intended only for illustrative purposes because various modifications and changes made without departing from the scope of the content disclosed in this application are apparent to those skilled in the art. Unless otherwise stated, all parts, percentages, and ratios reported in the following embodiments are based on weights, all reagents used in the embodiments are commercially available or synthesized in a conventional manner, and can be used directly without further processing, and all instruments used in the embodiments are commercially available.

## Example 1

Preparation of a positive electrode active material

A doping element was Sb, and a precursor antimony oxide ($Sb_2O_3$) of the doping element is roughly equally divided into three batches for doping of Sb. The preparation method includes:
$[Ni_{0.8}Co_{0.1}Mn_{0.1}](OH)_2$ as a precursor of the positive electrode active material, lithium hydroxide LiOH, and the first batch of antimony oxide were added to a high-speed mixer for mixing for 1 hour, to obtain a mixed material. A molar ratio of the precursor of the positive electrode active material to lithium hydroxide Li/Me was 1.05, Me represented a total number of moles of Ni, Co, and Mn in the precursors of the positive electrode active material. The mixed material was placed into an atmosphere sintering furnace for the first sintering, a sintering temperature was 830°C, a sintering duration was 5 hours, and a sintering atmosphere was an oxygen-containing atmosphere with an $O_2$ concentration of 90%.

A product of the first sintering treatment and a second batch of antimony oxides were added to the high-speed mixer for mixing for 1 hour, and then the second sintering was performed, with a sintering temperature, sintering duration, and sintering atmosphere same as those of the first sintering.

A product of the second sintering treatment and a third batch of antimony oxides were added to the high-speed mixer for mixing for 1 hour, and then the third sintering was performed, with a sintering temperature and sintering atmosphere same as those of the first two sintering, and a sintering duration of 10 hours. A total sintering duration was 20 hours.

After a product of the third sintering treatment was crushed and sieved, a high-nickel ternary positive electrode active material could be obtained. The mass of antimony oxide added satisfied that a true doping concentration of Sb in the positive electrode active material was 25100 $\mu g/cm^3$.

Preparation of an electrolyte

After EC, DEC, and DMC were mixed in a volume ratio of 1:1:1, a solvent was obtained, and then a lithium salt $LiPF_6$ was dissolved in the solvent, to obtain the electrolyte. A concentration of $LiPF_6$ was 1 mol/L.

Preparation of a button battery

The prepared positive electrode active material, conductive carbon black and a binder PVDF were dispersed into a solvent N-methylpyrrolidone (NMP) at a mass ratio of 90:5:5 and mixed well to obtain a positive electrode slurry. The positive electrode slurry was evenly applied on aluminum foil of the positive electrode current collector, and the positive electrode plate was obtained after drying and cold pressing.

In a button battery box, the positive electrode plate, the separator, and the lithium metal plate were stacked in sequence, the foregoing electrolyte was injected, and the button battery was obtained after assembly.

Preparation of a full battery

The prepared positive electrode active material, a conductive agent of acetylene black, and a binder PVDF were dispersed into a solvent NMP at a mass ratio of 94:3:3 and mixed well to obtain a positive electrode slurry. The positive electrode slurry was evenly applied on aluminum foil of the positive electrode current collector, and the positive electrode plate was obtained after drying and cold pressing.

Artificial graphite as a negative electrode active material, hard carbon, acetylene black as a conductive agent, styrene butadiene rubber (SBR) as a binder, and sodium carboxymethyl cellulose (CMC-Na) as a thickener were dispersed to deionized water at a mass ratio of 90:5:2:2:1, and were mixed well, to obtain a negative electrode slurry. The negative electrode slurry was evenly applied on aluminum foil of the negative electrode current collector, and the negative electrode plate was obtained after drying and cold pressing.

A polyethylene (PE) porous polymer film was used as the separator. The positive electrode plate, the separator, and the negative electrode plate were stacked in sequence, to obtain a jelly roll. The jelly roll was placed in an outer package, the foregoing electrolyte was injected, and the outer packaged was sealed, so that a full battery was obtained.

**Examples 2 to 13 and Examples 16 to 24**

A difference from Example 1 was that related parameters in the preparation step of the positive electrode active material were changed, a doping element oxide was selected as a source, and a proportion of each batch when the doping element was mixed, the sintering temperature from 800°C to 850°C, and a total sintering duration from 15 hours to 25 hours were adjusted to obtain a positive electrode active material with a predetermined type of doping element, doping amount, and doping evenness. For details, refer to Table 1 and Table 2.

In Embodiment 4 and Embodiment 12 with doping of a plurality of elements, the amounts of doping elements were basically the same.

In addition, the positive electrode active material precursor in Examples 22 to 24 is $[Ni_{0.5}Co_{0.2}Mn_{0.3}](OH)_2$.

**Example 14**

A difference from Example 1 was that doping element in Example 14 were added in a single batch, and a sintering temperature was 780°C. For other parameters, refer to Table 1 and Table 2.

**Example 15**

A difference from Example 1 was that doping element in Example 15 were added in a single batch, and a sintering temperature was 700°C. For other parameters, refer to Table 1 and Table 2.

**Example 25**

A difference from Example 1 was that in Example 25, the doping element precursor was divided into 3 batches based on a weight ratio of 47.5: 47.5: 5 for doping. Temperature of first two sintering was 700°C, and time of the first two sintering was 4 hours; temperature of third sintering was 600°C, and time was 2 hours. For other parameters, refer to Table 1 and Table 2.

**Example 26**

A difference from Example 1 was that in Example 26, the doping element precursor was divided into 3 batches based on a weight ratio of 45: 45: 10 for doping. Temperature of first two sintering was 600°C, and time of the first two sintering was 3 hours; temperature of third sintering was 500°C, and time was 1 hour. For other parameters, refer to Table 1 and Table 2.

**Comparative Examples 1 and 2**

A difference from Example 1 was that no doping element was added, and the positive electrode active material precursor in Example 2 was $[Ni_{0.5}Co_{0.2}Mn_{0.3}](OH)_2$. For other parameters, refer to Table 1 and Table 2.

Tests

(1) A relative deviation test of local mass concentration of the doping element in the secondary particles

2 g of powder sample of the positive electrode active material was weighted and taken, evenly sprinkled on a sample stage pasted with a conductive adhesive, and then gently pressed for fixing, or an electrode plate of 1 cm×1 cm was cut from a battery positive electrode plate, and was pasted on the sample stage as a to-be-tested sample. The sample stage was loaded into a vacuum sample chamber and fixed, an IB-09010CP cross-section polisher from an electronic company (JEOL) in Japan was used to prepare a cross-section of the secondary particles, points were selected with reference to 17 sites of the cross-section of the secondary particles shown in FIG. 2, and a size of each point is 20 nm × 20 nm. Mass concentrations of the doping element at the 17 sites were tested by using an X-Max energy dispersive spectrometer (EDS) from Oxford Instruments Group Plc in UK in combination with a Sigma-02-33 scanning electron microscope (SEM) from ZEISS in Germany. A test method was as follows: Li, O, Ni, Co, Mn, and the doping element were selected as the to-be-tested elements, SEM parameters of a 20 kV acceleration voltage, a 60 $\mu$m grating, an 8.5 mm working distance, and a 2.335 A current were set, and during the EDS test, when a spectrum area reached more than 250000 cts (controlled by acquisition time and an acquisition rate), the test stopped, data was collected, and the mass concentrations of the doping element at the sites were obtained and denoted respectively as $\eta_1, \eta_2, \eta_3, ..., \eta_{17}$.

A method for determining an average mass concentration $\bar{\eta}$ of the doping element in the secondary particles was as follows: The foregoing EDS-SEM test method was used, and as shown in a dashed box in FIG. 2, a test area covered all the scanned points of the foregoing secondary particles, and did not exceed the cross-section of the secondary particles.

A relative deviation $\sigma$ of local mass concentration of the doping element in the secondary particles was calculated based on the preceding equation (3).

To test the positive electrode active material in the battery, the battery can be disassembled in a drying room, a middle portion of the positive electrode plate was removed and placed into a beaker, and an appropriate amount of high-purity anhydrous dimethyl carbonate (DMC) was added into the beaker. The DMC was changed every 8 hours, the positive electrode plate was consecutively washed for 3 times, and then placed into a vacuum standing box in the drying room. The vacuum standing box was vacuumized to a vacuum state (-0.096 MPa), and the positive electrode plate was dried for 12 hours. An electrode plate sample of a size of 1 cm × 1 cm was cut off from the dried positive electrode plate, and the electrode plate sample was pasted on a sample stage pasted with a conductive adhesive. Alternatively, a blade was used to scrape 2 g of a powder of the positive electrode active material in the drying room as a to-be-tested sample. The test was performed in the foregoing method.

(2) Test for a true doping concentration of a positive electrode active material

True density $\rho_{true}$ of the positive electrode active material was determined by using a TD2400 powder true densitometer from Beijing Builder Electronic Technology Co., Ltd. A test method was as follows: A specific mass of positive electrode active material was fetched and put in a sample beaker under 25°C, and a mass m of the positive electrode active material was recorded; the sample beaker containing the positive electrode active material was put into a test chamber of the true densitometer, and a test system was sealed. An inert gas with a small molecular diameter, such as helium or nitrogen, was injected, a true volume V of the to-be-tested material was determined by measuring pressure of the gas in the sample chamber and an expansion chamber and based on Bohr's law $PV = nRT$, and the true density $\rho_{true}$ of the secondary particles was calculated according to m/V. Herein, n is the number of moles of gas in the sample beaker; R was an ideal gas constant and was set to 8.314; and T was an ambient temperature and was 298.15K.

A 7000DV inductively coupled plasma-optical emission spectrometer (inductively coupled plasma-optical emission spectrometer, ICP-OES) from PerkinElmer, Inc. (PE) in USA was used to test the mass concentration ω of the doping element in the positive electrode active material. The test method was as follows: An electrode plate containing the positive electrode active material was fetched and die cut into a disc with a total mass greater than 0.5 g or at least 5 g of a powder sample of the positive electrode active material was fetched. After the mass of the sample was weighed and recorded, the sample was put into a digestion tank, 10 mL of aqua regia was slowly added as a digestion reagent, and then the digestion tank was put into a Mars5 microwave digestion instrument from CEM Corporation in USA, and digestion was performed at a microwave radio frequency of 2450 Hz. A digested sample solution was transferred to a volumetric flask, shaken well, and sampled, the sample solution was placed into an ICP-OES sampling system, and the mass concentrations of the doping element of the positive electrode active material were tested under 0.6 MPa pressure of argon and 1300 W radio frequency power.

The true doping concentration Φ of the positive electrode active material was calculated based on the foregoing equation (4).

(3) Test for a Young's modulus of primary particles

The Young's modulus E of the primary particles was tested in the preceding determination method using SEM/SPM. In this test, for the jet mill, a GTJ-250 jet mill manufactured by Yixing Qinghua Powder Machinery Equipment Co., Ltd. was used.

(4) Test for an initial gram capacity of a button battery

The button battery was charged with a constant current of 0.1 C under 25°C to an upper limit of charge and discharge cut-off voltages, then charged at a constant voltage to a current less than or equal to 0.05 mA, after that, left standing for 2 minutes, and then discharged at a constant current of 0.1 C to a lower limit of the charge and discharge cut-off voltages. The discharging capacity in this case was the initial gram capacity of the button battery.

(5) Test for an initial gram capacity of a full battery

At 25°C, the button battery was charged at a constant current of 1/3C to an upper limit of a charge/discharge cut-off voltage, then charged at a constant voltage until a current was less than or equal to 0.05 mA, then was left standing for 5 minutes, and then discharged at a constant current of 1/3C to a lower limit of the charge/discharge cut-off voltage. The discharging capacity in this case was the initial gram capacity of the full battery.

(6) High-temperature cycling performance test of the full battery

The button batteries were charged at 45°C at a constant current of 1 C to an upper limit of charge and discharge cut-off voltages, then charged with a constant voltage to a current less than or equal to 0.05 mA, after that, left standing for 5 minutes, and then discharged at a constant current of 1 C to a lower limit of the charge and discharge cut-off voltages. This was a charging and discharging cycle. The discharging capacity in this case was recorded as a discharging specific capacity $D_1$ at the first cycling. Charging and discharging testing was performed for the battery for 400 cycles according to the foregoing method, and a discharging specific capacity $D_{400}$ at the 400th cycle was recorded.

Capacity retention rate (%) of the full battery after 400 cycles at 45°C at

$$1C/1C = D_{400} / D_1 \times 100\%$$

In tests (4), (5), and (6),
in Examples 1 to 21, Examples 25 and 26, and Comparative Example 1, the charge and discharge cut-off voltages of the button battery were 2.8 V to 4.25 V, and the charge and discharge cut-off voltages of the full battery were 2.8 V to 4.2 V.

In Examples 22 to 24 and Comparative Example 2, the charge and discharge cut-off voltages of the button battery were 2.8 V to 4.35 V, and the charge and discharge cut-off voltages of the full battery were 2.8 V to 4.3 V.

Test results of Examples 1 to 26 and Comparative Examples 1 and 2 are shown in Table 2.

EP 3 993 095 A1

## Table 1: Related parameters in preparation of a positive electrode active material

| Number | Type of doping element | Precursor of doping element | Mass ratio per batch of precursor of doping element | First sintering | | Second sintering | | Third sintering | |
|---|---|---|---|---|---|---|---|---|---|
| | | | | Temperature (°C) | Duration (h) | Temperature (°C) | Duration (h) | Temperature (°C) | Duration (h) |
| Example 1 | Sb | $Sb_2O_3$ | 1:1:1 | 830 | 5 | 830 | 5 | 830 | 10 |
| Example 2 | Zr | $ZrO_2$ | 35:35:30 | 820 | 4 | 820 | 5 | 820 | 9 |
| Example 3 | Si | $SiO_2$ | 30:30:40 | 830 | 3 | 830 | 4 | 800 | 8 |
| Example 4 | Zr+W | $ZrO_2$+$WO_2$ | 20:50:30 | 850 | 6 | 820 | 3 | 800 | 10 |
| Example 5 | Sb | $Sb_2O_3$ | 35:35:30 | 800 | 4 | 820 | 7 | 830 | 6 |
| Example 6 | Sb | $Sb_2O_3$ | 30:40:30 | 810 | 5 | 830 | 4 | 825 | 7 |
| Example 7 | Sb | $Sb_2O_3$ | 30:45:25 | 825 | 6 | 810 | 8 | 820 | 8 |
| Example 8 | Sb | $Sb_2O_3$ | 25:30:45 | 830 | 4 | 820 | 9 | 835 | 10 |
| Example 9 | Sb | $Sb_2O_3$ | 35:35:30 | 835 | 5 | 830 | 7 | 840 | 4 |
| Example 10 | Sb | $Sb_2O_3$ | 8:30:50 | 820 | 6 | 840 | 4 | 830 | 9 |

| Number | Type of doping element | Precursor of doping element | Mass ratio per batch of precursor of doping element | First sintering | | Second sintering | | Third sintering | |
|---|---|---|---|---|---|---|---|---|---|
| | | | | Temperature (°C) | Duration (h) | Temperature (°C) | Duration (h) | Temperature (°C) | Duration (h) |
| Example 11 | Sb | $Sb_2O_3$ | 8:40:40 | 830 | 7 | 835 | 5 | 840 | 9 |
| Example 12 | Sb+Ru+Te | $Sb_2O_3+Ru_2O_3+TeO_2$ | 35:35:30 | 820 | 4 | 830 | 5 | 830 | 7 |
| Example 13 | Nb | $Nb_2O_3$ | 50:30:20 | 830 | 6 | 820 | 5 | 830 | 9 |
| Example 14 | Nb | $Nb_2O_3$ | / | Single batch doping, and one sintering treatment at 780°C for 20 hours | | | | | |
| Example 15 | Nb | $Nb_2O_3$ | / | Single batch doping, and one sintering treatment at 700°C for 20 hours | | | | | |
| Example 16 | Mg | MgO | 25:30:45 | 830 | 3 | 820 | 6 | 835 | 8 |
| Example 17 | Ca | CaO | 30:40:30 | 835 | 4 | 830 | 3 | 840 | 9 |
| Example 18 | Pd | $PdO_2$ | 8:30:50 | 820 | 6 | 840 | 5 | 820 | 7 |
| Example 19 | La | $La_2O_3$ | 35:35:30 | 840 | 3 | 815 | 8 | 830 | 8 |
| Example 20 | Ba | BaO | 8:30:50 | 815 | 4 | 820 | 6 | 815 | 10 |
| Example 21 | Y | $Y_2O_3$ | 30:40:30 | 820 | 8 | 830 | 3 | 840 | 5 |

| Number | Type of doping element | Precursor of doping element | Mass ratio per batch of precursor of doping element | First sintering | | Second sintering | | Third sintering | |
|---|---|---|---|---|---|---|---|---|---|
| | | | | Temperature (°C) | Duration (h) | Temperature (°C) | Duration (h) | Temperature (°C) | Duration (h) |
| Example 22 | Sb | $Sb_2O_5$ | 35:35:30 | 835 | 7 | 820 | 3 | 815 | 6 |
| Example 23 | Nb | $Nb_2O_5$ | 25:30:45 | 830 | 8 | 835 | 8 | 820 | 5 |
| Example 24 | Y | $Y_2O_3$ | 8:40:40 | 820 | 6 | 815 | 8 | 840 | 7 |
| Example 25 | Sb | $Sb_2O_5$ | 47.5:47.5:5 | 700 | 4 | 700 | 4 | 600 | 2 |
| Example 26 | Sb | $Sb_2O_5$ | 45:45:10 | 600 | 3 | 600 | 3 | 500 | 1 |
| Comparative Example 1 | / | / | / | One sintering treatment at 830°C for 20 hours | | | | | |
| Comparative Example 2 | / | / | / | One sintering treatment at 830°C for 20 hours | | | | | |

In Table 1, mass ratio of batches of doping element precursors = mass of a first batch of doping element precursor/mass of a second batch of doping element precursors/mass of a third batch of doping element precursor

**Table 2**

| Number | $\Phi$ ($\mu$g/cm$^3$) | $\sigma$ (%) | E (GPa) | $\varepsilon$ (%) | Initial gram capacity of button battery (mAh/g) | Initial gram capacity of full battery (mAh/g) | Capacity retention rate (%) of full battery after 400 cycles at 45°C at 1C/1C |
|---|---|---|---|---|---|---|---|
| Example 1 | 25100 | 11 | 198 | 6 | 207.5 | 197.1 | 93.52 |
| Example 2 | 25500 | 8 | 194 | 9 | 204.9 | 195.4 | 91.85 |
| Example 3 | 25400 | 13 | 196 | 10 | 206.5 | 195.8 | 91.93 |
| Example 4 | 25200 | 9 | 197 | 8 | 207.1 | 196.7 | 92.65 |
| Example 5 | 1500 | 6 | 179 | 12 | 201.3 | 191.2 | 84.83 |
| Example 6 | 2300 | 11 | 181 | 12 | 202.1 | 192.7 | 85.20 |
| Example 7 | 14800 | 13 | 195 | 11 | 206.7 | 195.5 | 91.94 |
| Example 8 | 25200 | 9 | 205 | 10 | 207.3 | 196.2 | 93.23 |
| Example 9 | 36700 | 16 | 209 | 13 | 205.9 | 196.1 | 92.14 |
| Example 10 | 49100 | 8 | 211 | 12 | 204.1 | 194.0 | 90.08 |
| Example 11 | 58000 | 7 | 220 | 10 | 202.0 | 191.6 | 85.65 |
| Example 12 | 25500 | 10 | 203 | 8 | 206.9 | 196.4 | 94.13 |
| Example 13 | 24800 | 12 | 198 | 11 | 205.9 | 196.2 | 92.13 |
| Example 14 | 25100 | 20 | 200 | 10 | 201.1 | 192.4 | 86.21 |
| Example 15 | 25300 | 29 | 195 | 10 | 200.2 | 191.0 | 85.68 |
| Example 16 | 29300 | 12 | 170 | 9 | 197.5 | 187.7 | 84.27 |
| Example 17 | 29100 | 10 | 180 | 8 | 197.1 | 188.0 | 85.33 |
| Example 18 | 28900 | 7 | 198 | 10 | 206.3 | 196.4 | 92.23 |
| Example 19 | 29200 | 15 | 210 | 9 | 203.1 | 193.0 | 89.18 |
| Example 20 | 29000 | 9 | 225 | 11 | 200.3 | 190.3 | 83.11 |
| Example 21 | 25300 | 10 | 175 | 13 | 200.5 | 190.8 | 84.07 |
| Example 22 | 25100 | 13 | 199 | 12 | 176.6 | 171.4 | 93.54 |
| Example 23 | 24900 | 8 | 200 | 13 | 175.9 | 170.8 | 92.86 |
| Example 24 | 25300 | 10 | 178 | 12 | 172.5 | 166.2 | 91.12 |
| Example 25 | 25000 | 15 | 197 | 20 | 206.4 | 196.2 | 92.37 |
| Example 26 | 25100 | 19 | 196 | 45 | 205.6 | 193.7 | 89.91 |
| Comparative Example 1 | / | / | 169 | / | 197.6 | 188.3 | 82.35 |
| Comparative Example 2 | / | / | 175 | / | 171.0 | 165.3 | 90.05 |

In Table 2, E is the Young's modulus of the primary particles, $\Phi$ is a true doping concentration of the positive electrode active material; $\sigma$ is a relative deviation of local mass concentration of the doping element in the secondary particles; and $\varepsilon$ is a deviation of mass concentration of the doping element in the positive electrode active material with respect to an average mass concentration of the doping element in the secondary particles.

It can be seen from results of comparison between Examples 1 to 21, Example 25, Example 26, and Comparative Example 1, and between Examples 22 to 24 and Comparative Example 2 that the transition metal site of the positive electrode active material included nickel and the doping element, the Young's modulus E of the primary particles satisfied 175 GPa ≤ E ≤ 220 GPa, so that the lithium-ion secondary battery had both a relatively high initial gram capacity, and better high-temperature cycling performance.

It can be seen from the results of Example 1 and Examples 5 to 11 that when a doping concentration was less than 2300 $\mu$g/cm$^3$, the Young's modulus of the primary particles of the positive electrode material was not obviously improved, and an improvement effect of the high-temperature cycling performance and the capacity performance was small. When the doping concentration exceeded 50000 $\mu$g/cm$^3$, because of a damage of a body structure of the positive electrode active material, a capacity and high-temperature cycling performance of the positive electrode active material at 45°C were also inferior to those of the positive electrode active material with the true doping concentration $\Phi$ of 2300 $\mu$g/cm$^3$ to 50000 $\mu$g/cm$^3$.

It can be seen from results of Examples 16 to 21 that if the Young's modulus of the primary particles of the positive electrode active material was less than 175GPa because the type of doping element was improperly selected, the positive electrode active material cracked during a manufacturing process and charging and discharging processes, which caused a decrease in the capacity and the cycling performance; and as a result, when the Young's modulus of the primary particles in the positive electrode active material was greater than 220 GPa, rigidity of the positive electrode active material became larger and strong brittleness was shown. In this case, the positive electrode active material was prone to brittle cracking, and a side reaction occurred between a fresh surface generated during the cracking and the electrolyte, which increased the impedance, thereby exacerbating the capacity and the high-temperature cycling performance of the battery.

It can be seen from the results of Examples 12 to 15 that when the relative deviation of local mass concentration of the doping element in the secondary particles was less than 20%, doping evenness was better, properties of internal portions of the particles of the positive electrode active material remained the same, and migration and diffusion capabilities of lithium ions in different internal zones of the particles were at a same level. In addition, portions of the primary particles of the evenly doped positive electrode active material had close Young's moduli, that is, the portions of the primary particles had close deformation resistance and toughness, and therefore, internal stresses of the material were evenly distributed, and the material was not prone to crack. Therefore, an improvement effect on the capacity and the cycling performance of the battery was significant. When the relative deviation of the local mass concentration of the doping element in the secondary particles was greater than 20%, diffusion channels and barriers of lithium ions in the internal portions of the particles of the positive electrode active material were inconsistent, and there was a difference in structural stability and deformation resistance of zones, and as a result, internal stresses of the material were unevenly distributed, and a zone with a large internal stress was prone to crack, thereby exposing a fresh surface of the positive electrode active material, increasing impedance, and further exacerbating the capacity and the high-temperature cycling performance.

It can be seen from the results of Example 1, Example 25, and Example 26 that when the deviation $\varepsilon$ of mass concentration of the doping element in the positive electrode active material with respect to the average mass concentration of the doping element in the secondary particles was less than 30% and within the foregoing range, a relatively large amount of doping element were successfully distributed into the secondary particles, there was a small amount of doping element distributed in gaps or a surface of the secondary particles, the positive electrode active material showed good macro and micro consistency, and has a uniform structure and high particle stability, thereby facilitating the capacity extractability, and the room-temperature and high-temperature cycling performance of the positive electrode active material. When $\varepsilon$ was greater than 30%, more doping element was distributed in the gaps or the surface of the secondary particles, and as a result, the internal structural stability of the primary particles was not sufficiently improved, but the doping element distributed on the surface enclosed and isolated the side reaction of the electrolyte to some extent. Therefore, in this case, the capacity and the high-temperature cycling performance of the jelly roll were slightly reduced.

The foregoing descriptions are merely specific embodiments of this application, but are not intended to limit the protection scope of this application. Any equivalent modifications or replacements readily figured out by a person skilled in the art within the technical scope disclosed in this application shall fall within the protection scope of this application. Therefore, the protection scope of this application shall be subject to the protection scope of the claims.

**Claims**

1. A positive electrode active material, comprising secondary particles formed by agglomeration of primary particles, wherein the primary particles comprise a lithium transition metal oxide, and a transition metal site of the lithium transition metal oxide comprises nickel and a doping element; and
a Young's modulus E of the primary particles satisfies 175 GPa ≤ E ≤ 220 GPa.

2. The positive electrode active material according to claim 1, wherein the Young's modulus E of the primary particles satisfies 180 GPa $\leq$ E $\leq$ 210 GPa; and optionally, 190 GPa $\leq$ E $\leq$ 205 GPa.

3. The positive electrode active material according to claim 1 or 2, wherein a relative deviation of a local mass concentration of the doping element in the secondary particles is less than 30%, and optionally less than 20%.

4. The positive electrode active material according to any one of claims 1 to 3, wherein the doping element in an oxidation state has a valence higher than +3, and optionally has one or more of valences of +4, +5, +6, +7, and + 8.

5. The positive electrode active material according to any one of claims 1 to 4, wherein the doping element is selected from one or more of Si, Ti, V, Cr, Ge, Se, Zr, Nb, Mo, Ru, Rh, Pd, Sb, Te, Ce, and W; and optionally, the doping element comprises one or more of Si, Zr, Nb, Ru, Pd, Sb, Te, and W.

6. The positive electrode active material according to any one of claims 1 to 5, wherein true density $\rho_{true}$ of the positive electrode active material satisfies 4.6 g/cm$^3$ $\leq$ $\rho_{true}$ $\leq$ 4.9 g/cm$^3$.

7. The positive electrode active material according to any one of claims 1 to 6, wherein a true doping concentration $\Phi$ of the positive electrode active material satisfies 2300 $\mu$g/cm$^3$ $\leq$ $\Phi$ $\leq$ 50000 $\mu$g/cm$^3$, optionally 3000 $\mu$g/cm$^3$ $\leq$ $\Phi$ $\leq$ 30000 $\mu$g/cm$^3$, optionally 14800 $\mu$g/cm$^3$ $\leq$ $\Phi$ $\leq$ 36700 $\mu$g/cm$^3$, and optionally 24800 $\mu$g/cm$^3$ $\leq$ $\Phi$ $\leq$ 25500 $\mu$g/cm$^3$.

8. The positive electrode active material according to any one of claims 1 to 7, wherein a deviation of a mass concentration of the doping element in the positive electrode active material with respect to an average mass concentration of the doping element in the secondary particles satisfies $\varepsilon$ < 50%, optionally $\varepsilon$ $\leq$ 30%, and optionally $\varepsilon$ $\leq$ 20%.

9. The positive electrode active material according to any one of claims 1 to 8, wherein the positive electrode active material also satisfies one or more of the following requirements (1) to (4):

    (1) a volume average particle size $D_v50$ of the positive electrode active material is 5 $\mu$m to 20 $\mu$m, optionally 8 $\mu$m to 15 $\mu$m, and further optionally 9 $\mu$m to 11 $\mu$m;
    (2) a specific surface area of the positive electrode active material is 0.2 m$^2$/g to 1.5 m$^2$/g, and optionally 0.3 m$^2$/g to 1 m$^2$/g;
    (3) tap density of the positive electrode active material is 2.3 g/cm$^3$ to 2.8 g/cm$^3$; and
    (4) compacted density of the positive electrode active material under a pressure of 5 tons (equivalent to 49 kN) is 3.1 g/cm$^3$ to 3.8 g/cm$^3$.

10. The positive electrode active material according to any one of claims 1 to 9, wherein

    the lithium transition metal oxide satisfies a chemical formula $Li_{1+a}[Ni_xCo_yMn_zM_b]O_2$, wherein M is the doping element, M is selected from one or more of Si, Ti, V, Cr, Ge, Se, Zr, Nb, Mo, Ru, Rh, Pd, Sb, Te, Ce, and W, $0.5 \leq x < 1$, $0 \leq y < 0.3$, $0 \leq z < 0.3$, $0 \leq a < 0.2$, $0 < b < 0.3$, and $x + y + z + b = 1$; or
    the lithium transition metal oxide satisfies a chemical formula $Li_{1+c}[Ni_{r-d}Co_sMn_tM'_d]O_2$, wherein M' is the doping element, M' is selected from one or more of Si, Ti, V, Cr, Ge, Se, Zr, Nb, Mo, Ru, Rh, Pd, Sb, Te, Ce, and W, $0.5 \leq r - d < 1$, $0 \leq s < 0.3$, $0 \leq t < 0.3$, $0 \leq c < 0.2$, $0 < d < 0.3$, and $r + s + t = 1$.

11. A method for preparing a positive electrode active material, comprising the following steps:

    mixing a precursor of the positive electrode active material, a lithium source, and a precursor of a doping element to obtain a mixture, wherein the precursor of the positive electrode active material is selected from one or more of an oxide, hydroxide, or carbonate that contains Ni, optionally Co, and optionally Mn; and
    subjecting the mixture to a sintering treatment in an oxygen-containing atmosphere at a temperature of 600°C to 1000°C to obtain the positive electrode active material, wherein
    the positive electrode active material comprises secondary particles formed by agglomeration of primary particles, the primary particles comprise a lithium transition metal oxide, and a transition metal site of the lithium transition metal oxide comprises nickel and a doping element; and a Young's modulus E of the primary particles satisfies 175 GPa $\leq$ E $\leq$ 220 GPa.

12. The method according to claim 11, wherein the precursor of the doping element is selected from one or more of a silicon oxide, a titanium oxide, a vanadium oxide, a chromium oxide, a germanium oxide, a selenium oxide, a zirconium oxide, a niobium oxide, a molybdenum oxide, a ruthenium oxide, a rhodium oxide, a palladium oxide, an antimony oxide, a tellurium oxide, a cerium oxide, and a tungsten oxide; and optionally, the precursor of the doping element is selected from one or more of $SiO_2$, $SiO$, $TiO_2$, $TiO$, $V_2O_5$, $V_2O_4$, $V_2O_3$, $CrO_3$, $Cr_2O_3$, $GeO_2$, $SeO_2$, $ZrO_2$, $Nb_2O_5$, $NbO_2$, $MoO_2$, $MoO_3$, $RuO_2$, $Ru_2O_3$, $Rh_2O_3$, $PdO_2$, $PdO$, $Sb_2O_5$, $Sb_2O_3$, $TeO_2$, $CeO_2$, $WO_2$, and $WO_3$.

13. The method according to claim 11 or 12, wherein the sintering treatment satisfies at least one of the following requirements (a) to (c):

   (a) the oxygen-containing atmosphere is an air atmosphere or an oxygen atmosphere;
   (b) a temperature of the sintering treatment is 700°C to 900°C; and
   (c) duration of the sintering treatment is 5 hours to 25 hours, and optionally 10 hours to 20 hours.

14. The method according to any one of claims 11 to 13, wherein the precursor of the doping element is equally divided into L parts or randomly divided into L parts, and used for doping in L batches, wherein L is 1 to 5, and optionally 2 or 3; and
   the method optionally comprises: mixing the precursor of the positive electrode active material, the lithium source, and a first batch of precursor of the doping element, and performing a first sintering treatment; mixing a product of the first sintering treatment with a second batch of precursor of the doping element, performing a second sintering treatment, and so on, until a product of an $(L-1)^{th}$ sintering treatment is mixed with an $L^{th}$ batch of precursor of the doping element; and performing an $L^{th}$ sintering treatment to obtain the positive electrode active material.

15. The method according to claim 14, wherein the method further satisfies at least one of the following requirements (a) to (c):

   (a) a temperature for each sintering treatment is 600°C to 1000°C, optionally 700°C to 900°C, and further optionally 800°C to 850°C;
   (b) duration for each sintering treatment is 3 hours to 25 hours, and optionally 5 hours to 10 hours; and
   (c) total duration for sintering treatment is 5 hours to 25 hours, and optionally 15 hours to 25 hours.

16. A positive electrode plate, comprising a positive electrode current collector and a positive electrode active substance layer disposed on the positive electrode current collector, wherein the positive electrode active substance layer comprises the positive electrode active material according to any one of claims 1 to 10 or a positive electrode active material obtained in the preparation method according to any one of claims 11 to 15.

17. A lithium-ion secondary battery, comprising the positive electrode plate according to claim 16.

18. A battery module, comprising the lithium-ion secondary battery according to claim 17.

19. A battery pack, comprising the lithium-ion secondary battery according to claim 17 or the battery module according to claim 18.

20. An apparatus, comprising at least one of the lithium-ion secondary battery according to claim 17, the battery module according to claim 18, or the battery pack according to claim 19.

CP image for element distribution

FIG. 1

FIG. 2

**5**

FIG. 3

5

FIG. 4

**FIG. 5**

**FIG. 6**

**FIG. 7**

FIG. 8

## INTERNATIONAL SEARCH REPORT

| International application No. |
|---|
| **PCT/CN2020/109987** |

**A. CLASSIFICATION OF SUBJECT MATTER**

H01M 4/131(2010.01)i; H01M 4/505(2010.01)i; H01M 4/525(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 时代新能源, 阴极, 正极, 锂, 镍, 掺杂, 高化合价, 高价, 杨氏模量, 拉伸模量, 弹性模量, lithium, nickel, positive electrode, cathode, young???, tensile, modulus, li, ni, dop+, substitut+, valence

**C. DOCUMENTS CONSIDERED TO BE RELEVANT**

| Category* | Citation of document, with indication, where appropriate, of the relevant passages | Relevant to claim No. |
|---|---|---|
| X | CN 104584277 A (SANYO ELECTRIC CO., LTD.) 29 April 2015 (2015-04-29) description, paragraphs [0029]-[0034] | 1-20 |
| X | CN 1701451 A (SEIMI CHEM KK) 23 November 2005 (2005-11-23) description page 2 line 24- page 6 line 31 | 1-20 |
| A | CN 108878868 A (BEIJING INSTITUTE OF TECHNOLOGY) 23 November 2018 (2018-11-23) entire document | 1-20 |
| A | JP 2001080920 A (NIPPON CHEMICAL IND) 27 March 2001 (2001-03-27) entire document | 1-20 |
| A | US 2009314985 A1 (MALCUS STEFAN et al.) 24 December 2009 (2009-12-24) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 September 2020** | **05 November 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/109987**

| Patent document cited in search report | | | Publication date (day/month/year) | Patent family member(s) | | | Publication date (day/month/year) |
|---|---|---|---|---|---|---|---|
| CN | 104584277 | A | 29 April 2015 | WO | 2014155990 | A1 | 02 October 2014 |
| | | | | US | 2015221943 | A1 | 06 August 2015 |
| CN | 1701451 | A | 23 November 2005 | KR | 100629129 | B1 | 27 September 2006 |
| | | | | TW | I323524 | B | 11 April 2010 |
| | | | | CN | 1312792 | C | 25 April 2007 |
| | | | | KR | 20050044771 | A | 12 May 2005 |
| | | | | WO | 2004082046 | A1 | 23 September 2004 |
| | | | | TW | 200501485 | A | 01 January 2005 |
| | | | | US | 2005220700 | A1 | 06 October 2005 |
| CN | 108878868 | A | 23 November 2018 | | None | | |
| JP | 2001080920 | A | 27 March 2001 | JP | 4260302 | B2 | 30 April 2009 |
| US | 2009314985 | A1 | 24 December 2009 | EP | 2067196 | A1 | 10 June 2009 |
| | | | | WO | 2008043558 | A1 | 17 April 2008 |
| | | | | US | 8685289 | B2 | 01 April 2014 |
| | | | | CA | 2664781 | A1 | 17 April 2008 |
| | | | | JP | 2010505732 | A | 25 February 2010 |
| | | | | EP | 2067196 | B1 | 21 February 2018 |
| | | | | KR | 101421758 | B1 | 22 July 2014 |
| | | | | KR | 20090065527 | A | 22 June 2009 |
| | | | | JP | 5458886 | B2 | 02 April 2014 |
| | | | | DE | 102006049098 | A1 | 17 April 2008 |
| | | | | CA | 2664781 | C | 06 January 2015 |
| | | | | IN | 2009314985 | P1 | 24 December 2009 |

Form PCT/ISA/210 (patent family annex) (January 2015)

**EP 3 993 095 A1**

## REFERENCES CITED IN THE DESCRIPTION

### Patent documents cited in the description

- CN 201910824732